# EUROPÄISCHE PATENTSCHRIFT

(11) **EP 4 410 576 B1**
(45) Veröffentlichungstag und Bekanntmachung des Hinweises auf die Patenterteilung: **01.07.2026**
(21) Anmeldenummer: 24152535.1
(22) Anmeldetag: 18.01.2024
(51) Int. Cl.: B60K 1/00

(54) **ANTRIEBSSTRANG UND FAHRZEUG**
POWER TRAIN AND VEHICLE
CHAÎNE CINÉMATIQUE ET VÉHICULE

(30) Priorität: 01.02.2023 DE 102023102489
(43) Veröffentlichungstag der Anmeldung: 07.08.2024
(73) Patentinhaber: Deere & Company, Moline, IL 61265 (US)
(72) Erfinder: Lang, Matthias, Mannheim (DE); Mueller, David, Mannheim (DE); Gugel, Rainer, Mannheim (DE)
(74) Vertreter: Stein, Stefan

(56) Entgegenhaltungen:
- EP-A1- 2 179 879
- EP-A1- 3 105 847
- CN-A- 108 909 425
- CN-A- 110 289 729
- CN-B- 106 183 765
- DE-A1- 102018 212 143
- DE-A1- 102020 119 984
- DE-A1- 102020 131 693
- US-A1- 2014 183 996
- US-A1- 2021 199 180

## Beschreibung

Die Erfindung betrifft einen Antriebsstrang gemäss dem Oberbegriff des unabhängigen Anspruchs 1 und ein Fahrzeug gemäss dem Oberbegriff des unabhängigen Anspruchs 11.

EP 3 945 665 A1 und DE 10 2020 119 984 A1 offenbaren ein Getriebesystem für eine landwirtschaftliche Maschine. Das offenbarte Getriebesystem ist geeignet für Betrieb mit einem Verbrennungsmotor oder einem hydraulischen Motor und umfasst einen leistungsverzweigten Getriebeabschnitt, der wenigstens einen variablen Getriebezweig und einen mechanischen Getriebezweig aufweist. Der variable Zweig weist eingangs- und ausgangsseitig jeweils wenigstens eine Elektromaschine für den Generator und Motorbetrieb auf. Die Elektromaschinen sind elektrisch miteinander verbunden. Die Antriebsleistung wird durch den mechanischen und variablen Zweig aufgeteilt und geleitet. Eine eingangsgekoppelte magnetisch-elektrische Umlaufgetriebestufe führt den variablen und mechanischen Zweig zusammen. Nachteil des Getriebesystems ist, dass dieses nur mit einem Verbrennungsmotor betreibbar ist. Darüber hinaus ist das Getriebesystem konstruktiv aufwändig ausgestaltet.

Der vorliegenden Erfindung liegt daher die Aufgabe zugrunde einen Antriebsstrang und ein Fahrzeug vorzuschlagen, durch welche die vorgenannten Probleme überwunden werden. Insbesondere sollen ein Antriebsstrang und ein Fahrzeug vorgeschlagen werden, die konstruktiv einfacher und/oder weniger aufwändig ausgestaltet sind und/oder nur mit Elektromaschinen betreibbar sind und/oder insbesondere in einem Vorwärts- und Rückwärtsfahrbetrieb betreibbar sind.

Diese Aufgabe wird durch einen Antriebsstrang mit den Merkmalen des Anspruchs 1 und ein Fahrzeug mit den Merkmalen des Anspruchs 11 gelöst. Die abhängigen Ansprüche beziehen sich auf besonders vorteilhafte Ausführungsformen der Erfindung.

Erfindungsgemäss wird ein Antriebsstrang für ein Fahrzeug, bevorzugt ein landwirtschaftliches Fahrzeug oder ein landwirtschaftliches Zugfahrzeug oder eine Baumaschine, besonders bevorzugt ein Traktor, Schlepper vorgeschlagen. Der Antriebsstrang umfasst eine erste Elektromaschine und eine Eingangswelle, wobei die Eingangswelle mit der ersten Elektromaschine verbunden und/oder antreibbar ist, insbesondere antreibbar verbunden und/oder mechanisch gekoppelt oder mechanisch koppelbar ist. Der Antriebsstrang umfasst einen Energiespeicher, der mit der ersten Elektromaschine verbunden und/oder koppelbar ist, insbesondere elektrisch verbunden und/oder elektrisch koppelbar ist. Der Antriebsstrang umfasst ausserdem eine Ausgangswelle und eine magnetisch-elektrische Umlaufgetriebestufe, die einen Rotor, insbesondere einen inneren Rotor, einen Stator, insbesondere einen äußeren Stator und dazwischen einen Modulationsring, insbesondere einen magnetischen Modulationsring umfasst. Der Modulationsring, der insbesondere einen Abtrieb der Umlaufgetriebestufe umfassen kann oder sein kann, ist mit der Ausgangswelle verbunden, insbesondere antreibbar verbunden und/oder mechanisch gekoppelt oder mechanisch koppelbar. Der innere Rotor ist mit der Eingangswelle verbunden, insbesondere antreibbar verbunden und/oder mechanisch gekoppelt oder mechanisch koppelbar. Der Energiespeicher ist mit dem Stator verbunden und/oder koppelbar, insbesondere elektrisch verbunden und/oder elektrisch koppelbar, sodass elektrische Leistung vom Energiespeicher an den Stator der Umlaufgetriebestufe übertragbar ist. Die magnetisch-elektrische Umlaufgetriebestufe, insbesondere der Stator, ist derart betreibbar, bevorzugt ansteuerbar und/oder steuerbar und/oder regelbar, besonders bevorzugt einstellbar und/oder verstellbar, dass die Ausgangswelle entgegen der Drehrichtung der Eingangswelle rotierbar ist, sodass der Antriebsstrang in einem Vorwärts- und Rückwärtsfahrbetrieb betreibbar ist, bevorzugt ansteuerbar und/oder steuerbar und/oder regelbar, besonders bevorzugt einstellbar und/oder verstellbar. Die Drehrichtung der Ausgangswelle kann somit entgegen der oder entgegengesetzt zur Drehrichtung der Eingangswelle sein. Die Ausgangswelle ist eine Hohlwelle und die Eingangswelle ist eine Vollwelle. Die Eingangswelle ist in der Ausgangswelle angeordnet.

Die erste Elektromaschine ist über die oder mittels der Eingangswelle mit dem Antrieb verbunden, insbesondere antreibbar verbunden und/oder mechanisch gekoppelt oder mechanisch koppelbar, und der Modulationsring ist über die oder mittels der Ausgangswelle mit der Zapfwelle verbunden, insbesondere antreibbar verbunden und/oder mechanisch gekoppelt oder mechanisch koppelbar. Dadurch kann eine Antriebsleistung bzw. Traktionsleistung von der ersten Elektromaschine an einen Antrieb übertragen werden, sodass der Antriebsstrang bzw. das Fahrzeug antreibbar ist. Ausserdem kann eine Antriebsleistung vom Modulationsring auf die Zapfwelle übertragen werden. Im Speziellen kann Antriebsleistung von der ersten Elektromaschine zum magnetisch-elektrischen Umlaufgetriebe und vom Modulationsring an die Zapfwelle übertragen werden. Vorteilhafterweise ist diese Ausführung der Antriebsstrang konstruktiv einfacher und weniger aufwändig ausgestaltet sein. Ausserdem sind dadurch vorteilhafterweise der Antriebsstrang und das Fahrzeug nur mit Elektromaschinen betreibbar sein, sodass ein umweltfreundlicher und nur auf elektrischer Energie basierender Antriebsstrang realisiert werden kann.

Mit anderen Worten, die magnetisch-elektrische Umlaufgetriebestufe, insbesondere der Stator, kann zur Erzielung einer zur Drehrichtung der Eingangswelle entgegengesetzten Drehrichtung der Ausgangswelle ansteuerbar sein. Dabei kann der Rückwärtsfahrbetrieb des Antriebsstrangs dadurch ermöglicht werden, dass die Drehzahl der ersten Elektromaschine in der magnetisch-elektrischen Umlaufgetriebestufe derart überlagerbar ist, dass die Drehrichtung des Modulationsrings bzw. des Abtriebs der magnetisch-elektrischen Umlaufgetriebestufe, insbesondere auch der Ausgangswelle, entgegengesetzt zur Drehrichtung der Eingangswelle bzw. zum Vorwärtsfahrbetrieb betreibbar, bevorzugt ansteuerbar und/oder steuerbar und/oder regelbar, besonders bevorzugt einstellbar und/oder verstellbar ist.

Der Antriebsstrang verändert also die über die erste Elektromaschine und/oder den Stator bzw. eine zweite Elektromaschine eingeleitete Antriebsleistung in Drehmoment und Drehzahl. Der Energiespeicher kann eine Batterie und/oder eine Superkondensator und/oder eine Brennstoffzelle und/oder eine sonstige Vorrichtung zur Speicherung von elektrischer Energie sein. Die erste und/oder zweite Elektromaschine können ein Elektromotor und/oder eine Brennstoffzelle, insbesondere eine mit Gleichstrom und/oder Drehstrom betriebene Synchron- und/oder Asynchronmaschine mit permanenter und/oder elektrischer Erregung, bevorzugt eine permanenterregte Drehstrom-Synchronmaschine sein.

Der innere Rotor kann eine erste Anzahl magnetischer Polpaare umfassen. Der innere Rotor kann mit der ersten elektrischen Maschine über die Eingangswelle verbunden sein, insbesondere antreibbar verbunden und/oder mechanisch gekoppelt oder koppelbar sein. Der äussere Stator kann ein äusserer Rotor sein, der eine zweiten Anzahl magnetischer Polpaare umfasst. Ebenso kann der äussere Stator ein Stator mit Spulen, insbesondere als die zweite Elektromaschine ausgebildet sein. Legt man Wechselstrom an die Spulen an, so entsteht dadurch ein rotierendes elektromagnetisches Feld. Das elektromagnetische Feld ist in seiner Funktion dem äußeren Rotor mit Permanentmagneten gleichwertig. Die erste Elektromaschine und der Stator, insbesondere die zweite Elektromaschine, können in einem Generator- und/oder Motorbetrieb betreibbar sein, bevorzugt ansteuerbar und/oder steuerbar und/oder regelbar, besonders bevorzugt einstellbar und/oder verstellbar sein. Die elektrische Leistung der ersten Elektromaschine kann grösser als die elektrische Leistung des äusseren Stators bzw. der zweiten Elektromaschine sein. Der Modulationsring kann eine dritte Anzahl ferromagnetischer Segmente umfassen, sodass das elektromagnetische Feld zwischen Rotor und Stator moduliert.

Im Speziellen kann der Antriebsstrang eine Getriebeeinrichtung umfassen. Die Getriebeeinrichtung kann einen mechanischen Getriebezweig und einen variablen Getriebezweig aufweisen. Ausserdem kann die Getriebeeinrichtung, insbesondere der variable Getriebezweig, die magnetisch-elektrischen Umlaufgetriebestufe umfassen. Eingangsseitig kann der variable Getriebezweig mit dem Energiespeicher und somit insbesondere auch der ersten Elektromaschine verbunden sein. Ausgangsseitig kann der variable Getriebezweig mit dem Stator, insbesondere der zweiten Elektromaschine verbunden sein. Die Antriebsleistung kann durch den mechanischen und variablen Getriebezweig aufgeteilt und geleitet werden. Die die magnetisch-elektrischen Umlaufgetriebestufe kann eingangsgekoppelt sein. Ausserdem kann die magnetisch-elektrischen Umlaufgetriebestufe den variablen Getriebezweig und mechanischen Getriebezweig zusammenführen. Der Stator, insbesondere die zweite Elektromaschine kann also in Wirkverbindung mit dem Modulationsring der magnetisch elektrischen Umlaufgetriebestufe sein, welcher wiederrum mit dem Rotor zusammenwirkt. Der Energiespeicher und der Stator bzw. die zweite Elektromaschine stellen zusammen mit der magnetisch-elektrischen Umlaufgetriebestufe den variablen Getriebezweig dar, und zusammen mit der Eingangswelle die Getriebeeinrichtung. Der mechanische Getriebezweig kann aus der Eingangswelle gebildet sein. Die magnetisch-elektrische Umlaufgetriebestufe kann mit dem Stator, insbesondere die zweite Elektromaschine, bzw. der Stator selbst, insbesondere die zweite Elektromaschine selbst, derart ansteuerbar sein, dass die Ausgangswelle der magnetisch-elektrischen Umlaufgetriebestufe in Gegenrichtung zur Eingangswelle rotierbar sein kann. Ein zusätzlicher Rückwärtsgang kann entfallen und der gesamte Aufbau des Antriebsstrangs wird konstruktiv vereinfacht, wodurch die benötigte Teileanzahl und entsprechende Herstellungs- und Einbauvorgänge reduziert werden. Darüber hinaus kann der Antriebsstrang vorteilhafterweise voll elektrisch betrieben werden.

In Ausgestaltung der Erfindung umfasst der Antriebsstrang eine Steuereinheit. Der Antriebsstrang, insbesondere die erste Elektromaschine und/oder der Energiespeicher und/oder die magnetisch-elektrische Umlaufgetriebestufe, bevorzugt der Stator, besonders bevorzugt die zweite Elektromaschine, und/oder eine Leistungselektronik und/oder eine erste Getriebeeinheit und/oder eine zweite Getriebeeinheit und/oder eine Lastschaltwendeeinheit und/oder einer oder mehrere Aktoren des Antriebsstrangs, können mit der Steuereinheit betreibbar, bevorzugt ansteuerbar und/oder steuerbar und/oder regelbar, besonders bevorzugt einstellbar und/oder verstellbar sein. Im Speziellen kann die magnetisch-elektrische Umlaufgetriebestufe, insbesondere der Stator, mit der Steuereinheit derart betreibbar, bevorzugt ansteuerbar und/oder steuerbar und/oder regelbar, besonders bevorzugt einstellbar und/oder verstellbar sein, dass die Ausgangswelle entgegen der Drehrichtung der Eingangswelle rotierbar ist, sodass der Antriebsstrang in einem Vorwärts- und Rückwärtsfahrbetrieb betreibbar ist.

Die Steuereinheit kann dem Antriebsstrang zugeordnet sein oder der Antriebsstrang kann die Steuereinheit umfassen. Die Steuereinheit kann als ein elektronisches Modul, ein eingebettetes System, eine Recheneinheit, ein Computer, als ein Modul zum Steuern und/oder Regeln der Vorrichtung ausgebildet sein. Die Steuereinheit kann einen Prozessor, einen Speicher und/oder alle Software, Hardware, Algorithmen, Anschlüsse, insbesondere auch Sensoren, umfassen, die für die Steuerung und/oder Regelung des Antriebsstrangs erforderlich sind. Ein Verfahren kann als Programm oder Algorithmus ausgebildet sein, welches auf und/oder mit der Steuereinheit ausführbar ist. Die Steuereinheit kann jedes Gerät umfassen, das Daten von verschiedenen Sensoren analysieren, Daten vergleichen und die erforderlichen Entscheidungen treffen kann, um den Betrieb des Antriebsstrangs und die erforderlichen Aufgaben zur Steuerung und/oder Regelung des Betriebs des Antriebsstrangs zu steuern und/oder zu regeln und/oder auszuführen.

Die Steuereinheit kann mit dem Antriebsstrang, insbesondere der ersten Elektromaschine und/oder dem Energiespeicher und/oder der magnetisch-elektrischen Umlaufgetriebestufe, bevorzugt dem Stator, besonders bevorzugt der zweiten Elektromaschine, und/oder der Leistungselektronik und/oder der ersten Getriebeeinheit und/oder der zweiten Getriebeeinheit und/oder der Lastschaltwendeeinheit und/oder einem oder mehreren Aktoren des Antriebsstrangs verbunden sein, bevorzugt signalverbunden und/oder signalübertragend und/oder datenleitend verbunden sein. Die Steuereinheit kann zum Betrieb, bevorzugt der Steuerung und/oder Regelung und/oder Ansteuerung, besonders bevorzugt zum Einstellen und/oder Verstellen, der ersten Elektromaschine und/oder des Energiespeichers und/oder der magnetisch-elektrischen Umlaufgetriebestufe und/oder des Stators bzw. der zweiten Elektromaschine und/oder der Leistungselektronik ausgebildet sein. Unter einer signalverbundenen und/oder signalübertragenden und/oder datenleitenden Verbindung kann dabei unter anderem verstanden werden, dass ein Austausch von Signalen bzw. Daten zwischen den verbundenen Bauteilen stattfindet. Signale können beispielsweise von der Steuereinheit empfangen und versendet werden und/oder verarbeitet und/oder bearbeitet werden. Die Verbindung zwischen der Steuereinheit und den Bauteilen des Antriebsstrangs kann kabelgebunden, insbesondere also mit Kabel, und/oder kabellos, also per Funk, beispielsweise mit Bluetooth oder WLAN realisiert sein. Der Kommunikationsbus kann beispielsweise Isobus, CAN-Bus oder ähnliches sein kann. Ausserdem kann mit der Steuereinheit eine weitere Steuereinheit steuerbar und/oder regelbar und/oder ansteuerbar sein. Die weitere Steuereinheit kann wie die Steuereinheit ausgebildet sein. Die Steuereinheit kann dem Fahrzeug zugeordnet, insbesondere am Fahrzeug angeordnet sein. Die Steuereinheit kann auch zweiteilig beispielsweise als Teil des Fahrzeugs und als Teil des Antriebsstrangs ausgebildet sein. Die Steuereinheit kann unmittelbar mit der in einer Kabine des Fahrzeugs angeordneten Ein- und Ausgabeeinheit Verbindung stehen, durch welche von einer Bedienperson eingegebene Daten an die Steuereinheit übertragen oder von dieser empfangen und ausgegeben werden können. Denkbar ist aber auch, dass die Steuereinheit mittelbar durch eine übergeordnete Steuereinheit mit der Ein- und Ausgabeeinheit verbunden ist. Die Steuereinheit kann in die Ein- und Ausgabeeinheit integriert sein, oder umgekehrt.

In Ausgestaltung der Erfindung umfasst der Antriebsstrang eine Leistungselektronik, um die elektrische Leistung zwischen der ersten Elektromaschine, dem Energiespeicher und dem und dem Stator der magnetisch-elektrischen Umlaufgetriebestufe zu übertragen. Der Energiespeicher und die erste Elektromaschine und der Stator oder die zweite Elektromaschine können miteinander verbunden sein, beispielsweise mittels Kabel, sodass elektrische Leistung zwischen diesen übertragbar ist. Elektrische Leistung kann mit ersten Elektromaschine an den Energiespeicher oder umgekehrt übertragbar sein. Ebenso kann elektrische Leistung vom Energiespeicher an den Stator oder umgekehrt übertragbar sein. Mit der Leistungselektronik können die erste Elektromaschine, der Energiespeicher und der Stator, insbesondere die zweite Elektromaschine, ansteuerbar, insbesondere einstellbar und/oder verstellbar sein. Ebenso kann die Leistungselektronik mit der Steuereinheit kommunizieren. Die Leistungselektronik kann ein elektronisches Steuergerät und/oder einen Inverter und/oder einen Spannungswandler umfassen. Im Betrieb kann der Inverter die Spannung des Energiespeichers in eine Spannung umwandeln, welche die erste Elektromaschine und/oder der Stator bzw. die zweite Elektromaschine benötigen. Zum Aufladen des Energiespeichers kann dieser Vorgang umgekehrt werden. Der Spannungswandler kann aber auch die Energie des Energiespeichers in eine für das Bordnetz des Fahrzeugs benötigte Spannung umwandeln. Als Vorteile daraus ergeben sich, dass ein zweiter Energiespeicher zum Betrieb des Bordnetzes ggf. entfallen kann, über die Spannung des Bordnetzes betriebene Geräte (z.B. Absorptionskühlschrank am 12V Anschluss) länger betrieben werden können und ein entladener Energiespeicher für die Versorgung des Bordnetzes über den Energiespeicher für den Fahrantriebe wieder aufgeladen werden kann.

Vorteilhafterweise ist aber auch eine umgekehrte Ausgestaltung möglich, d.h. die erste Elektromaschine ist über die oder mittels der Eingangswelle mit dem Antrieb verbunden, insbesondere antreibbar verbunden und/oder mechanisch gekoppelt oder mechanisch koppelbar, und der Modulationsring ist über die oder mittels der Ausgangswelle mit der Zapfwelle verbunden, insbesondere antreibbar verbunden und/oder mechanisch gekoppelt oder mechanisch koppelbar. Dadurch kann eine Antriebsleistung bzw. Traktionsleistung von der ersten Elektromaschine an einen Antrieb übertragen werden, sodass der Antriebsstrang bzw. das Fahrzeug antreibbar ist. Ausserdem kann eine Antriebsleistung vom Modulationsring auf die Zapfwelle übertragen werden. Im Speziellen kann Antriebsleistung von der ersten Elektromaschine zum magnetisch-elektrischen Umlaufgetriebe und vom Modulationsring an die Zapfwelle übertragen werden. Vorteilhafterweise ist diese Ausführung der Antriebsstrang konstruktiv einfacher und weniger aufwändig ausgestaltet sein. Ausserdem sind dadurch vorteilhafterweise der Antriebsstrang und das Fahrzeug nur mit Elektromaschinen betreibbar sein, sodass ein umweltfreundlicher und nur auf elektrischer Energie basierender Antriebsstrang realisiert werden kann.

In Ausgestaltung der Erfindung umfasst der Antriebsstrang eine erste und/oder zweite Getriebeeinheit. Die erste und/oder zweite Getriebeeinheit können der magnetisch-elektrischen Umlaufgetriebestufe, insbesondere der Getriebeeinrichtung, im Leistungsfluss vorgelagert oder nachgelagert sein, bevorzugt nachgelagert sein. Die erste und/oder zweite Getriebeeinheit können einen Rückwärtsgang aufweisen. Die erste Getriebeeinheit kann ein Stufengetriebe, insbesondere ein Einstufengetriebe oder ein Mehrstufengetriebe oder ein Doppelkupplungsgetriebe, oder ein stufenloses Getriebe sein. Die zweite Getriebeeinheit kann ein Zapfwellengetriebe, insbesondere in zweistufiger oder vierstufiger Ausführung als Stirnradgetriebe sein. Das Stufengetriebe kann Kupplungen, insbesondere lastschaltbare Kupplungen, und reines oder mehrere gleiche oder verschiedene Zahnradstufen umfassen. Die Kupplungen können die im Eingriff stehenden Zahnradstufen miteinander verbinden. Das Mehrstufengetriebe kann in eine Mehrzahl von Lastschaltstufen schaltbar sein, insbesondere volllastschaltbar sein. Das stufenlose Getriebe kann einen oder mehrere hydraulische Variatoren umfassen, um höhere Antriebsleistung sicher umwandeln zu können. Hierbei wird eingangsseitig des stufenlosen Getriebes mittels Hydrostaten ein Teil der Antriebsleistung in hydraulische Leistung umgewandelt. Mittels der Variatoren kann der Anteil der hydraulischen Leistung variiert werden. Ausgangsseitig wird die hydraulische Energie wieder in mechanische Energie umgewandelt. Vorteilhafterweise können so zusätzliche Gänge bzw. Gangstufen mit dem Antriebsstrang realisiert werden und gleichzeitig der Bauraum des Antriebsstrangs reduziert bzw. klein gehalten werden.

In Ausgestaltung der Erfindung umfasst der Antriebsstrang eine Lastschaltwendeeinheit zur Umkehr der Fahrtrichtung, insbesondere eine lastschaltbare oder eine nicht-lastschaltbare Lastschaltwendeeinheit umfasst. Die Lastschaltwendeeinheit kann der magnetisch-elektrischen Umlaufgetriebestufe im Leistungsfluss vorgelagert oder nachgelagert sein. Die Lastschaltwendeeinheit kann eine Getriebestufe zur Drehrichtungsumkehr sein. Die Lastschaltwendeeinheit kann im Leistungsfluss zwischen der ersten Elektromaschine und der magnetisch-elektrischen Umlaufgetriebestufe angeordnet sein oder nach der magnetisch-elektrischen Umlaufgetriebestufe, insbesondere an und/oder auf der Ausgangswelle angeordnet sein. Die Lastschaltwendeeinheit kann als einzelnes Bauteil des Antriebsstrangs ausgeführt sein. Damit wird die Komplexität reduziert. Die Lastschaltwendeeinheit kann für ein geringeres Drehmoment ausgelegt werden, wodurch Produktionsaufwand und Teilegewicht reduziert wird.

Als weitere vorteilhafte Massnahme weist die Lastschaltwendeeinheit einen Planetenradsatz auf. Darüber hinaus kann der Lastschaltwendeeinheit, insbesondere dem Planetenradsatz, eine Kupplungseinrichtung vorgelagert sein. Mit der Kupplungseinrichtung kann die Lastschaltwendeeinheit vom Antriebsstrang entkoppelt werden.

In Ausgestaltung der Erfindung ist ein Hinterachskegeltrieb mit der Ausgangswelle verbunden und/oder die Ausgangswelle ist mit einer Verzahnung eines Vorderachsantriebs verbunden, insbesondere antreibbar verbunden und/oder mechanisch gekoppelt oder mechanisch koppelbar. Vorteilhafterweise können aufgrund der direkten Verbindung der Ausgangswelle mit dem Hinterachskegeltrieb teure und wartungsanfällige Verbindungselemente, beispielsweise eine Gelenkwelle, eingespart werden. Ausserdem ist die Ausgangswelle mit einer Verzahnung eines Vorderachsantriebs in Verbindung. Dazu kann ein Vorderachsantriebsrad mit der Ausgangswelle in Verbindung stehen, insbesondere mit der Ausgangswelle drehfest verbunden oder wahlweise drehfest verbindbar und lösbar sein. Das Vorderachsantriebsrad kann aber auch unabhängig von der Ausgangswelle angeordnet sein, also beispielsweise als Teil des Vorderachsantriebs ausgebildet sein. Dabei kann das Vorderachsantriebsrad mit einem Zahnrad auf der Ausgangswelle, also insbesondere einem Vorderachsrad, in Eingriff stehen. Das Vorderachsrad kann mit der Ausgangswelle verbunden sein, insbesondere drehfest verbunden oder wahlweise drehfest verbindbar oder lösbar sein. Vorteilhafterweise kann somit der Vorderachsantrieb mit dem Hinterachskegeltrieb mittels der Ausgangswelle verbunden sein, insbesondere antreibbar verbunden und/oder mechanisch gekoppelt oder mechanisch koppelbar. Ausserdem übernimmt von Vorteil die Ausgangswelle zusätzlich die Funktion der Verbindung einer ersten und zweiten Fahrzeugachse, wodurch ein weiteres Verbindungselement eingespart werden kann.

Die Erfindung betrifft weiter Fahrzeug, bevorzugt ein landwirtschaftliches Fahrzeug oder ein landwirtschaftliches Zugfahrzeug oder eine Baumaschine, besonders bevorzugt ein Traktor, Schlepper, mit einem Antriebsstrang, insbesondere einem Antriebsstrang nach einem der Ansprüche 1 bis 13. Das Fahrzeug kann die erste Elektromaschine und/oder den Stator bzw. die zweite Elektromaschine als einen Antriebsmotor umfassen. Dabei kann das Fahrzeug mit dem Antriebsstrang antreibbar sein, insbesondere von der ersten Elektromaschine und/oder dem Stator bzw. der zweiten Elektromaschine antreibbar sein. Der Antriebsstrang kann mit zumindest einer Fahrzeugachse des Fahrzeugs, insbesondere der zweiten Fahrzeugachse bzw. der Hinterachse, in antreibbar verbunden sein und/oder kann mit einer weiteren Fahrzeugachse des Fahrzeugs, insbesondere der ersten Fahrzeugachse bzw. der Vorderachse, abtreibbar verbunden oder abtreibbar verbindbar sein. Das erfindungsgemässe Fahrzeug weist die oben beschriebenen Vorteile des erfindungsgemässen Antriebsstrangs auf.

Der Antriebsstrang und das Fahrzeug können wie folgt betreibbar sein. Die erste Elektromaschine kann mit der elektrischen Energie bzw. Leistung aus dem Energiespeicher Antriebsleistung erzeugen und als mechanische Leistung an die Eingangswelle übertragen. Gleichzeitig kann aus dem Energiespeicher elektrische Energie bzw. Leistung an den Stator, insbesondere die zweite Elektromaschine, übertragen werden. Die Steuerung und/oder Regelung und/oder Ansteuerung der Versorgung mit und des Austauschs von elektrischer Energie, insbesondere Strom und Spannung, zwischen Energiespeicher und erster Elektromaschine und Stator bzw. zweiter Elektromaschine kann mit der Leistungselektronik und/oder der Steuereinheit erfolgen. Mit der Steuerung und/oder Regelung und/oder Ansteuerung der elektrischen Energie bzw. von Strom und Spannung kann die an der magnetisch-elektrischen Umlaufgetriebestufe erzeugte und abgehende Leistung, insbesondere abgehende Drehzahl und/oder abgehendes Drehmoment, gesteuert und/oder geregelt und/oder angesteuert, insbesondere eingestellt und/oder verstellt werden. Durch eine Änderung der Erregerfrequenz können unterschiedliche Drehmomente und/oder Drehzahlen in der magnetisch-elektrischen Umlaufgetriebestufe eingestellt werden. Die anliegende Leistung am Rotor, als auch die anliegende Leistung am Stator bedingt die sich einstellende Leistung am Modulationsring. Die aufgrund der Wechselwirkung am magnetisch-elektrischen Umlaufgetriebe, insbesondere zwischen Stator, Modulationsring und Rotor, abgehende Leistung, insbesondere abgehende Drehzahl und/oder abgehendes Drehmoment, kann mit dem Modulationsring an die Ausgangswelle und von der Ausgangswelle, je nach Ausführungsbeispiels, an die erste oder Getriebeeinheit und/oder die Zapfwelle und/oder den Antrieb übertragen werden. Der Anteil an verbleibender mechanischer Leistung an der Eingangswelle kann, je nach Ausführungsbeispiels, an die erste oder Getriebeeinheit und/oder die Zapfwelle und/oder den Antrieb übertragen werden.

Im Folgenden werden die Erfindung sowie weitere Vorteile und vorteilhafte Weiterbildungen und Ausgestaltungen der Erfindung sowohl in apparativer als auch in verfahrenstechnischer Hinsicht anhand von Ausführungsbeispielen und unter Bezugnahme auf die Zeichnung näher erläutert. Dabei sind hinsichtlich ihrer Funktion übereinstimmende bzw. vergleichbare Bauteile mit denselben Bezugszeichen gekennzeichnet. Die Zeichnungen zeigen:
- Fig. 1: eine schematische Darstellung eines erfindungsgemässen Fahrzeugs, und
- Fig. 2: eine schematische Darstellung eines nicht erfindungsgemässen Antriebsstrangs, und
- Fig. 3: eine schematische Darstellung eines ersten Ausführungsbeispiels des erfindungsgemässen Antriebsstrangs, und
- Fig. 4: eine schematische Darstellung eines nicht erfindungsgemässen Antriebsstrangs, und
- Fig. 5: eine schematische Darstellung eines zweiten Ausführungsbeispiels des erfindungsgemässen Antriebsstrangs, und
- Fig. 6: eine schematische Darstellung eines nicht erfindungsgemässen Antriebsstrangs, und
- Fig. 7: eine schematische Darstellung eines nicht erfindungsgemässen Antriebsstrangs, und
- Fig. 8: eine schematische Darstellung eines nicht erfindungsgemässen Antriebsstrangs.

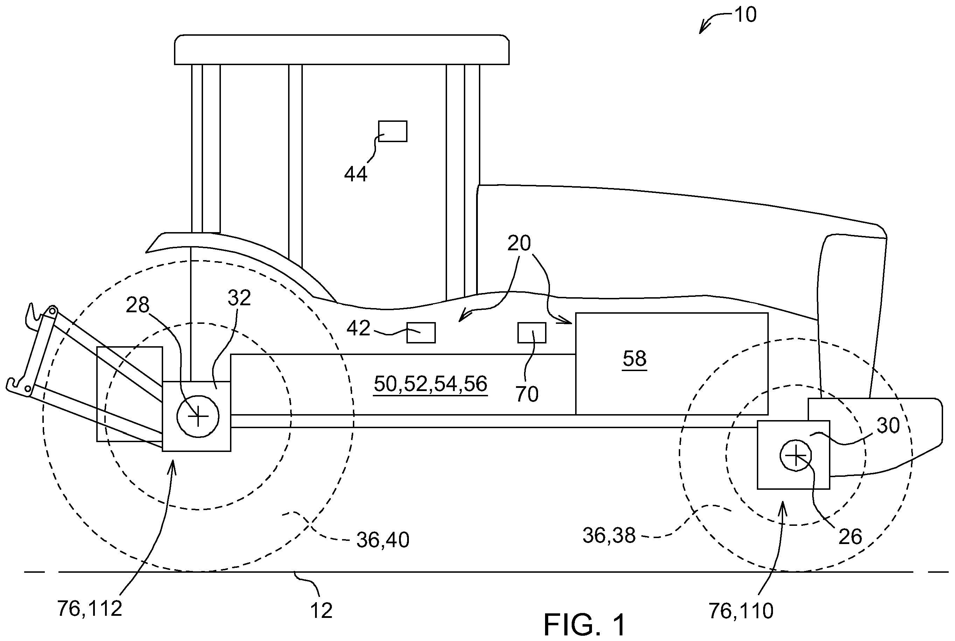

Figur 1 zeigt eine schematische Darstellung eines ersten Ausführungsbeispiels eines erfindungsgemässen Fahrzeugs 10, hier eines Traktors bzw. Schleppers, mit einem erfindungsgemässen Antriebsstrangs 20. Das Fahrzeug 10 ist mit dem Antriebsstrang 20 antreibbar.

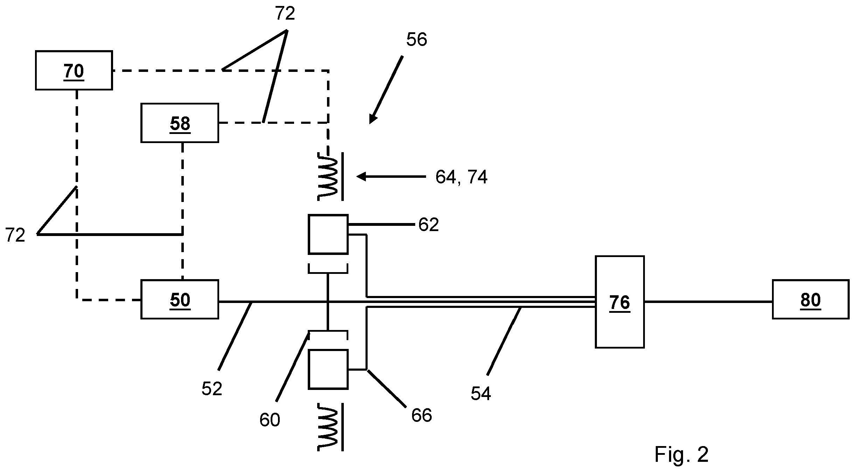

Der Antriebsstrang 20 umfasst eine erste Elektromaschine 50, eine Eingangswelle 52 (siehe auch Figuren 2 bis 8), die mit der ersten Elektromaschine 50 verbunden, insbesondere antreibbar verbunden und/oder mechanisch gekoppelt oder mechanisch koppelbar ist, und eine Ausgangswelle 54 (siehe auch Figuren 2 bis 8), einen Energiespeicher 58, der mit der ersten Elektromaschine 50 verbunden und/oder koppelbar ist, und eine magnetisch-elektrische Umlaufgetriebestufe 56.

Das Fahrzeug 10, insbesondere der Antriebsstrang 20, umfasst eine erste Fahrzeugachse 26 und eine zweite Fahrzeugachse 28. Die erste Fahrzeugachse 26 kann eine Vorderachse und die zweite Fahrzeugachse 28 eine Hinterachse sein. Ausserdem kann die erste Fahrzeugachse 26 als lenkbare Achse ausgeführt sein. Das Fahrzeug 10, insbesondere der Antriebsstrang 20, kann ausserdem ein erstes Differential 30, also insbesondere ein Vorderachsdifferential, umfassen. Die erste Fahrzeugachse 26 kann mit dem ersten Differential 30 verbunden sein, insbesondere antreibbar verbunden und/oder mechanisch koppelbar oder mechanisch gekoppelt sein. Das Fahrzeug 10, insbesondere der Antriebsstrang 20, kann ausserdem ein zweites Differential 32, also insbesondere ein Hinterachsdifferential, umfassen. Die zweite Fahrzeugachse 28 kann mit dem zweiten Differential 32 verbunden sein, insbesondere antreibbar verbunden und/oder mechanisch koppelbar oder mechanisch gekoppelt sein. Das erste und zweite Differential 30, 32 können optional vorgesehen sein.

Die erste Elektromaschine 50 kann insbesondere als Elektromotor oder Brennstoffzelle ausgeführt sein. Mit der ersten Elektromaschine 50 kann eine Drehbewegung und/oder Kraft und/oder ein Drehmoment erzeugbar und auf die erste und/oder zweite Fahrzeugachse 26, 28 übertragbar sein. Die erste und/oder zweite Fahrzeugachse 26, 28 wandeln die Drehbewegung und/oder Kraft und/oder das Drehmoment der ersten Elektromaschine 22 in eine Drehbewegung und/oder Kraft und/oder ein Drehmoment eines oder mehrerer Bodeneingriffsmittel 36 und somit in einen Schub des Fahrzeugs 10 um. Das Fahrzeug 10 kann eines oder mehrere Bodeneingriffsmittel 36, hier in Form von Rädern 38, 40 dargestellt, aufweisen, welche mit einem Untergrund 12 zur Übertragung von Antriebskräften in Eingriff stehen und/oder durch die sich das Fahrzeug 10 auf dem Untergrund 12 abstützt. Das Fahrzeug 10 kann ausserdem ein Fahrgestell (nicht dargestellt) aufweisen, wobei das Fahrgestell insbesondere von den an der ersten und/oder zweiten Fahrzeugachse 28, 30 aufgehängten Rädern 38, 40 getragen werden kann. Im Speziellen sind ein erstes Paar Räder 38 an der ersten Fahrzeugachse 26 und ein zweites Paar Räder 40 an der zweiten Fahrzeugachse 28 angeordnet sein. Dabei können die Durchmesser der Rädern 38, 40 voneinander abweichen, insbesondere kann der Durchmesser des ersten Paars Räder 38 kleiner als der Durchmesser des zweiten Paars Räder 40 sein.

Alternativ können die Bodeneingriffsmittel 36 auch als Raupen oder Ketten ausgebildet und angeordnet sein.

Das Fahrzeug 10, und insbesondere der Antriebsstrang 20, kann eine Steuereinheit 42 umfassen. Die Steuereinheit 42 kann unmittelbar mit einer in einer Kabine des Fahrzeugs angeordneten Ein- und Ausgabeeinheit 44 Verbindung stehen, durch welche von einer Bedienperson eingegebene Daten an die Steuerungsvorrichtung 42 übertragen oder von dieser empfangen und ausgegeben werden können. Der Antriebsstrang 20 kann mit der Steuereinheit 42 betreibbar sein.

Ausserdem kann das Fahrzeug 10, insbesondere der Antriebsstrang 20, eine Leistungselektronik 70 umfassen, um die elektrische Leistung bzw. Energie zwischen der ersten Elektromaschine 50, dem Energiespeicher 58 und einem Stator 62 (siehe Figuren 2 bis 8) der magnetisch-elektrischen Umlaufgetriebestufe 56 zu übertragen.

Das Fahrzeug 10, insbesondere der Antriebsstrang 20, umfasst einen Antrieb 76. Der Antrieb 76 kann die erste Fahrzeugachse 26 und/oder die zweite Fahrzeugachse 28 und/oder das erste Differential 30 und/oder das zweite Differential 32 und/oder das oder die Bodeneingriffsmittel 36 umfassen. Das Fahrzeug 10, insbesondere der Antriebsstrang 20, kann einen Vorderachsantrieb 110 aufweisen, der die erste Fahrzeugachse 26 und/oder das erste Differential 30 und/oder das oder die Bodeneingriffsmittel 36 umfassen kann. Ebenso kann das Fahrzeug 10, oder insbesondere der Antriebsstrang 20, einen Hinterachsantrieb 102 aufweisen, der die zweite Fahrzeugachse 28 und/oder das zweite Differential 32 und/oder das oder die Bodeneingriffsmittel 36 umfassen kann.

Figur 2 zeigt eine schematische Darstellung eines nicht erfindungsgemässen Antriebsstrangs 20. Der in Figur 2 gezeigte Antriebsstrang 20 entspricht im Wesentlichen dem in Figur 1 gezeigten Antriebsstrang 20, sodass im Folgenden lediglich auf Details und/oder Unterschiede eingegangen wird. Das Fahrzeug 10 kann den Antriebsstrang 20, wie in Figur 2 dargestellt, umfassen.

Die magnetisch-elektrische Umlaufgetriebestufe 56 umfasst einen Rotor 60, einen Stator 64 und dazwischen einen magnetischen Modulationsring 62. Der Modulationsring 62 ist mit der Ausgangswelle 54 verbunden. Der Rotor 60 ist mit der Eingangswelle 52 verbunden, insbesondere antreibbar verbunden und/oder mechanisch gekoppelt oder mechanisch koppelbar. Der Energiespeicher 58 ist mit der ersten Elektromaschine und dem Stator 64, insbesondere einer zweiten Elektromaschine 74, verbunden und/oder koppelbar, insbesondere elektrisch verbunden und/oder elektrisch koppelbar, sodass elektrische Leistung zwischen den Komponenten, insbesonderevom und zum Energiespeicher 58 übertragbar ist. Die magnetisch-elektrische Umlaufgetriebestufe 56, insbesondere der Stator 64, ist derart betreibbar, dass die Ausgangswelle 54 entgegen der Drehrichtung der Eingangswelle 52 rotierbar ist, sodass der Antriebsstrang 20 in einem Vorwärts- und Rückwärtsfahrbetrieb betreibbar ist.

Mit anderen Worten, die magnetisch-elektrische Umlaufgetriebestufe 56, insbesondere der Stator 64, kann zur Erzielung einer zur Drehrichtung der Eingangswelle 52 entgegengesetzten Drehrichtung der Ausgangswelle 54 ansteuerbar sein. Im Speziellen kann die magnetisch-elektrische Umlaufgetriebestufe 56, insbesondere der Stator 64, mit der Steuereinheit 42 derart betreibbar, bevorzugt ansteuerbar und/oder steuerbar und/oder regelbar, besonders bevorzugt einstellbar und/oder verstellbar sein, dass die Ausgangswelle 54 entgegen der Drehrichtung der Eingangswelle 52 rotierbar ist, sodass der Antriebsstrang 20 in einem Vorwärts- und Rückwärtsfahrbetrieb betreibbar ist. Dabei kann der Rückwärtsfahrbetrieb des Antriebsstrangs 20 dadurch ermöglicht werden, dass die Drehzahl der ersten Elektromaschine 50 in der magnetisch-elektrischen Umlaufgetriebestufe 56 derart überlagert wird, dass die Drehrichtung des Modulationsrings 62 bzw. des Abtriebs der magnetisch-elektrischen Umlaufgetriebestufe 66, und somit auch der Ausgangswelle 54, entgegengesetzt zur Drehrichtung der Eingangswelle 52 bzw. im Vorwärtsfahrbetrieb betreibbar, bevorzugt ansteuerbar und/oder steuerbar und/oder regelbar, besonders bevorzugt einstellbar und/oder verstellbar ist.

Mit der Leistungselektronik 70 kann, um elektrische Leistung zwischen der ersten Elektromaschine 50, dem Energiespeicher 58 und dem und dem Stator 64 der magnetisch-elektrischen Umlaufgetriebestufe 56 zu übertragen. Der Energiespeicher 58 und die erste Elektromaschine 50 und der Stator 64, insbesondere die zweite Elektromaschine 74, können mittels Verbindungselementen, vorliegend mittels Kabel 72 verbunden sein, sodass elektrische Leistung zwischen diesen übertragbar ist. Elektrische Leistung kann mit ersten Elektromaschine 50 an den Energiespeicher 58 und umgekehrt übertragbar sein. Ebenso kann elektrische Leistung vom Energiespeicher 58 an den Stator 64 bzw. die zweite Elektromaschine und umgekehrt übertragbar sein. Die Leistungselektronik 70 kann ein elektronisches Steuergerät und/oder einen Inverter und/oder einen Spannungswandler umfassen.

Die Ausgangswelle 54 ist als eine Hohlwelle und die Eingangswelle 52 als eine Vollwelle ausgebildet. Die Eingangswelle 52 ist in der Ausgangswelle 54 angeordnet. Die Ausgangswelle 54 ist koaxial zur Eingangswelle 52 angeordnet. Es kann aber auch die Ausgangswelle 54 als eine Vollwelle und die Eingangswelle 52 als eine Hohlwelle ausgebildet sein. Dann wäre die Eingangswelle 52 in der Ausgangswelle 54 angeordnet.

Die erste Elektromaschine 50 ist über die oder mit der Eingangswelle 52 mit einer Zapfwelle 80 verbunden, insbesondere antreibbar verbunden und/oder mechanisch gekoppelt oder mechanisch koppelbar. Der Modulationsring 60 ist über die oder mit der Ausgangswelle 54 mit dem Antrieb 76 verbunden, insbesondere antreibbar verbunden und/oder mechanisch gekoppelt oder mechanisch koppelbar. Dadurch kann eine Antriebsleistung, also ein Drehmoment und/oder eine Drehzahl, von der ersten Elektromaschine 50 auf die Zapfwelle 80 übertragen werden. Ausserdem kann eine Antriebsleistung bzw. Traktionsleistung vom Modulationsring 60 an den Antrieb 76 übertragen werden, sodass der Antriebsstrang 20 bzw. das Fahrzeug 10 antreibbar ist. Im Speziellen kann Antriebsleistung bzw. Traktionsleistung von der ersten Elektromaschine 50 zum magnetisch-elektrischen Umlaufgetriebe 56 und vom Modulationsring 60 an den Antrieb 76 übertragen werden.

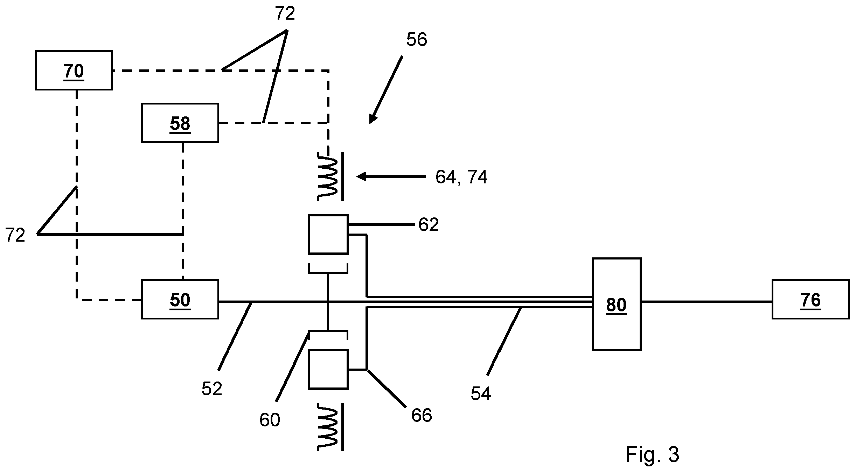

Figur 3 zeigt eine schematische Darstellung eines ersten Ausführungsbeispiels des erfindungsgemässen Antriebsstrangs 20. Der in Figur 3 gezeigte Antriebsstrang 20 entspricht im Wesentlichen dem in den Figuren 1 und 2 gezeigten Antriebsstrang 20, sodass im Folgenden lediglich auf Details und/oder Unterschiede eingegangen wird. Das Fahrzeug 10 kann den Antriebsstrang 20, wie in Figur 3 dargestellt, umfassen. Beim Antriebsstrang 20 gemäss Figur 3 ist die erste Elektromaschine 50 über die Eingangswelle 52 mit dem Antrieb 76 verbunden, insbesondere antreibbar verbunden und/oder mechanisch gekoppelt oder mechanisch koppelbar, und der Modulationsring 62 über die Ausgangswelle 54 mit der Zapfwelle 80 verbunden, insbesondere antreibbar verbunden und/oder mechanisch gekoppelt oder mechanisch koppelbar.

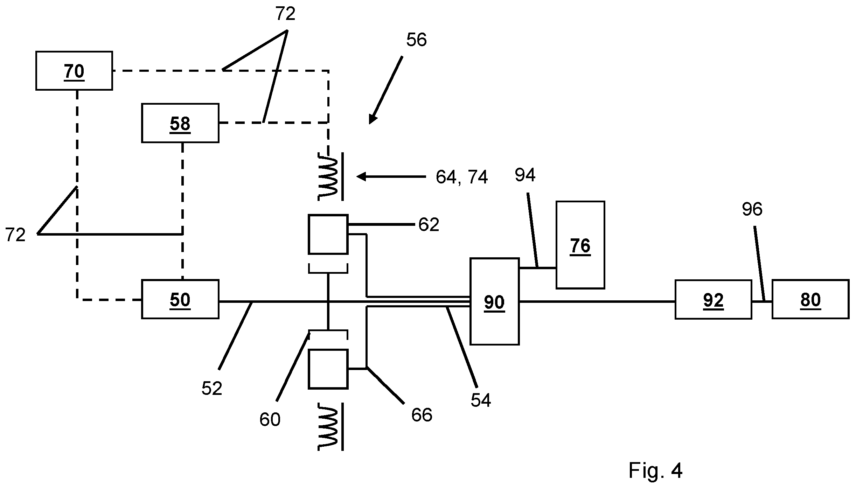

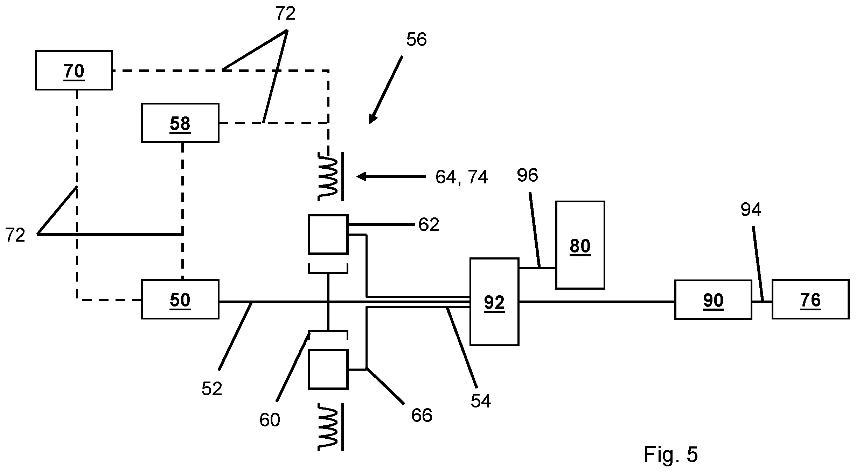

Figur 4 zeigt eine schematische Darstellungen eines nicht erfindungsgemässen Antriebsstrangs 20. Figur 5 zeigt eine schematische Darstellungen eines zweiten Ausführungsbeispiels des erfindungsgemässen Antriebsstrangs 20. Der in Figur 4 gezeigte Antriebsstrang 20 entspricht im Wesentlichen den in den Figuren 1 bis 3 gezeigten Antriebssträngen 20 und der in Figur 5 gezeigte Antriebsstrang 20 entspricht im Wesentlichen den in den Figuren 1 bis 4 gezeigten Antriebssträngen 20, sodass im Folgenden lediglich auf Details und/oder Unterschiede eingegangen wird. Das Fahrzeug 10 kann die Antriebsstränge 20, wie in den Figuren 4 und 5 dargestellt, umfassen.

Die Antriebsstränge gemäss der Figuren 4 und 5 umfassen eine erste und/oder zweite Getriebeeinheit 90, 92. Der Antriebsstrang 20 kann also entweder die erste oder die zweite Getriebeeinheit 90, 92 oder beide oder keine Getriebeeinheit umfassen. Die erste und/oder zweite Getriebeeinheit 90, 92 können der magnetisch-elektrischen Umlaufgetriebestufe 56 im Leistungsfluss vor- oder nachgelagert sein. Vorliegend sind die erste und zweite Getriebeeinheit 90, 92 der magnetisch-elektrischen Umlaufgetriebestufe 56 im Leistungsfluss nachgelagert. Die erste und/oder zweite Getriebeeinheit 90, 92 können einen Rückwärtsgang aufweisen. Die erste Getriebeeinheit 90 kann ein Stufengetriebe, insbesondere ein Einstufengetriebe oder ein Mehrstufengetriebe oder ein Doppelkupplungsgetriebe, oder ein stufenloses Getriebe sein. Die zweite Getriebeeinheit 92 kann ein Zapfwellengetriebe sein.

Figur 4 zeigt einen Antriebsstrang 20, bei welchem die erste Elektromaschine 50 über die Eingangswelle 52 mit der zweiten Getriebeeinheit 92 verbunden ist, insbesondere antreibbar verbunden und/oder mechanisch gekoppelt oder mechanisch koppelbar ist. Der Abtrieb der zweiten Getriebeeinheit 96 ist dabei mit der Zapfwelle 80 verbunden, insbesondere antreibbar verbunden und/oder mechanisch gekoppelt oder mechanisch koppelbar. Der Modulationsring 62 bzw. der Abtrieb der Umlaufgetriebestufe 66 ist über die Ausgangswelle 54 mit der ersten Getriebeeinheit 90 verbunden, insbesondere antreibbar verbunden und/oder mechanisch gekoppelt oder mechanisch koppelbar. Der Abtrieb der ersten Getriebeeinheit 94 ist dabei mit dem Antrieb 76 verbunden, insbesondere antreibbar verbunden und/oder mechanisch gekoppelt oder mechanisch koppelbar.

Figur 5 zeigt einen Antriebsstrang 20 mit einer umgekehrten Anordnung. Die erste Elektromaschine 50 ist über die Eingangswelle 52 mit der ersten Getriebeeinheit 90 verbunden, insbesondere antreibbar verbunden und/oder mechanisch gekoppelt oder koppelbar. Der Abtrieb der ersten Getriebeeinheit 94 ist dabei mit dem Antrieb 76 verbunden, insbesondere antreibbar verbunden und/oder mechanisch gekoppelt oder mechanisch koppelbar. Der Modulationsring 62 bzw. der Abtrieb der Umlaufgetriebestufe 66 ist über die Ausgangswelle 54 mit der zweiten Getriebeeinheit 92 verbunden, insbesondere antreibbar verbunden und/oder mechanisch gekoppelt oder mechanisch koppelbar ist. Der Abtrieb der zweiten Getriebeeinheit 96 ist mit der Zapfwelle 80 verbunden, insbesondere antreibbar verbunden und/oder mechanisch gekoppelt oder mechanisch koppelbar.

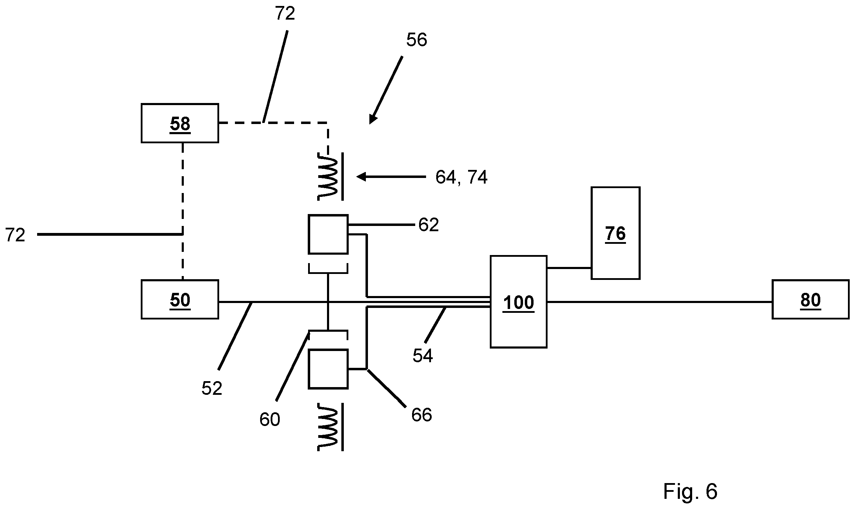

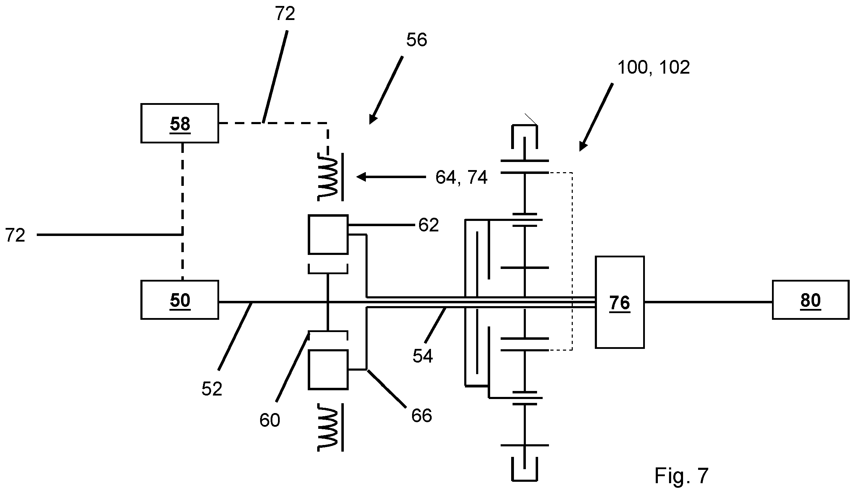

Figuren 6 und 7 zeigt eine schematische Darstellung eines nicht erfindungsgemässen Antriebsstrangs 20. Figuren 6 und 7 zeigen schematische Darstellungen eines fünften und sechsten Ausführungsbeispiels des erfindungsgemässen Antriebsstrangs 20. Der in Figur 6 gezeigte Antriebsstrang 20 entspricht im Wesentlichen den in den Figuren 1 bis 5 gezeigten Antriebssträngen 20 und der in Figur 7 gezeigte Antriebsstrang 20 entspricht im Wesentlichen den in den Figuren 1 bis 6 gezeigten Antriebssträngen 20, sodass im Folgenden lediglich auf Details und/oder Unterschiede eingegangen wird. Das Fahrzeug 10 kann die Antriebsstränge 20, wie in den Figuren 6 und 7 dargestellt, umfassen. Der Antriebsstrang 20 umfasst eine Lastschaltwendeeinheit 100 zur Umkehr der Fahrtrichtung (siehe Figur 6). Die Lastschaltwendeeinheit 100 ist der magnetisch-elektrischen Umlaufgetriebestufe 56 im Leistungsfluss nachgelagert. Die Lastschaltwendeeinheit 100 kann der magnetisch-elektrischen Umlaufgetriebestufe 56 im Leistungsfluss aber auch vorgelagert sein. Die Lastschaltwendeeinheit 100 kann insbesondere einen Planetenradsatz 102 aufweisen (siehe Figur 7).

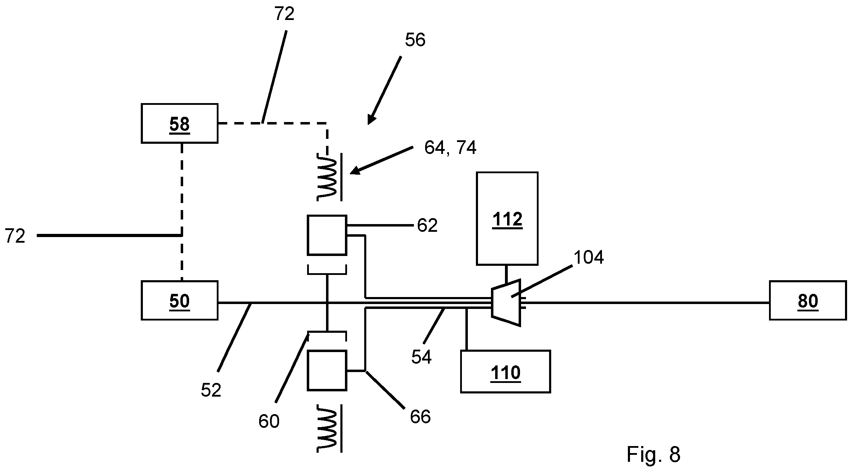

Figur 8 zeigt eine schematische Darstellung eines nicht erfindungsgemässen Antriebsstrangs 20. Der in Figur 8 gezeigte Antriebsstrang 20 entspricht im Wesentlichen dem in den Figuren 1 und 7 gezeigten Antriebssträngen 20, sodass im Folgenden lediglich auf Details und/oder Unterschiede eingegangen wird. Das Fahrzeug 10 kann den Antriebsstrang 20, wie in Figur 8 dargestellt, umfassen. Mit der Ausgangswelle 54 ist ein Hinterachskegeltrieb 104 verbunden, insbesondere antreibbar verbunden und/oder mechanisch gekoppelt oder koppelbar. Der Hinterachskegeltrieb 104 wiederum ist mit dem Hinterachsantriebs 112 verbunden, insbesondere antreibbar verbunden und/oder mechanisch gekoppelt oder koppelbar. Wahlweise kann die Ausgangswelle 54 auch mit einer Verzahnung eines Vorderachsantriebs 110 verbunden sein.

## Patentansprüche

1. Antriebsstrang (20) für ein Fahrzeug (10), umfassend
eine Eingangswelle (52),
- eine Ausgangswelle (54),
- einen Energiespeicher (58),
und eine magnetisch-elektrische Umlaufgetriebestufe (56), die einen Rotor (60), einen Stator (64) und dazwischen einen Modulationsring (62) umfasst, wobei
- der Modulationsring (62) mit der Ausgangswelle (54) verbunden ist, und
- der Rotor (60) mit der Eingangswelle (52) verbunden ist, und
- der Energiespeicher (58) mit dem Stator (64) verbunden und/oder koppelbar ist, sodass elektrische Leistung vom Energiespeicher (58) an den Stator (64) übertragbar ist, wobei die magnetisch-elektrische Umlaufgetriebestufe (56), insbesondere der Stator (64), derart betreibbar ist, dass die Ausgangswelle (54) entgegen der Drehrichtung der Eingangswelle (52) rotierbar ist, sodass der Antriebsstrang (20) in einem Vorwärts- und Rückwärtsfahrbetrieb betreibbar ist, und die Ausgangswelle (54) eine Hohlwelle ist und die Eingangswelle (52) eine Vollwelle ist, wobei die Eingangswelle (52) in der Ausgangswelle (54) angeordnet ist, **dadurch gekennzeichnet, dass** der Antriebsstrang (20) ferner eine erste Elektromaschine (50) umfasst, wobei die Eingangswelle (52) mit der ersten Elektromaschine (50) verbunden ist und der Energiespeicher (58) mit der ersten Elektromaschine (50) verbunden und/oder koppelbar ist, wobei die erste Elektromaschine (50) über die Eingangswelle (52) mit einem Antrieb (76) verbunden ist und der Modulationsring (62) über die Ausgangswelle (54) mit einer Zapfwelle (80) verbunden ist.

2. Antriebsstrang nach Anspruch 1, **dadurch gekennzeichnet, dass** der Antriebsstrang (20) eine Steuereinheit (42) umfasst, wobei der Antriebsstrang mit der Steuereinheit (42) betreibbar ist.

3. Antriebsstrang nach einem der Ansprüche 1 oder 2, **dadurch gekennzeichnet, dass** der Antriebsstrang (20) eine Leistungselektronik (70) umfasst, um die elektrische Leistung zwischen der ersten Elektromaschine (50), dem Energiespeicher (58) und dem und dem Stator (64) der magnetisch-elektrischen Umlaufgetriebestufe (56) zu übertragen.

4. Antriebsstrang nach mindestens einem der vorangehenden Ansprüche, **dadurch gekennzeichnet, dass** die Ausgangswelle (54) koaxial zur Eingangswelle (52) ist.

5. Antriebsstrang nach mindestens einem der vorangehenden Ansprüche, **dadurch gekennzeichnet, dass** der Antriebsstrang (20) eine erste und/oder zweite Getriebeeinheit (90, 92) umfasst.

6. Antriebsstrang nach Anspruch 5, **dadurch gekennzeichnet, dass** die erste und/oder zweite Getriebeeinheit (90, 92) einen Rückwärtsgang aufweisen.

7. Antriebsstrang nach einem der Ansprüche 5 oder 6, **dadurch gekennzeichnet, dass** die erste Elektromaschine (50) über die Eingangswelle (52) mit der ersten Getriebeeinheit (90) verbunden ist, und/oder der Modulationsring (62) über die Ausgangswelle (54) mit der zweiten Getriebeeinheit (92) verbunden ist.

8. Antriebsstrang nach mindestens einem der vorangehenden Ansprüche, **dadurch gekennzeichnet, dass** der Antriebsstrang (20) eine Lastschaltwendeeinheit (100) zur Umkehr der Fahrtrichtung umfasst.

9. Antriebsstrang nach Anspruch 8, **dadurch gekennzeichnet, dass** die Lastschaltwendeeinheit (100) einen Planetenradsatz (102) aufweist.

10. Antriebsstrang nach mindestens einem der vorangehenden Ansprüche, **dadurch gekennzeichnet, dass** ein Hinterachskegeltrieb (104) mit der Ausgangswelle (54) verbunden ist und/oder die Ausgangswelle (54) mit einer Verzahnung eines Vorderachsantriebs (110) verbunden ist.

11. Fahrzeug umfassend einen Antriebsstrang nach einem der Ansprüche 1 bis 10.

12. Fahrzeug nach Anspruch 11, wobei das Fahrzeug (10) mit dem Antriebsstrang (20) antreibbar ist.

## Claims

1. Drivetrain (20) for a vehicle (10), comprising
- an input shaft (52),
- an output shaft (54),
- an energy store (58),
and a magnetic-electrical epicyclic transmission stage (56) that comprises a rotor (60), a stator (64) and an interposed modulation ring (62), wherein
- the modulation ring (62) is connected to the output shaft (54), and
- the rotor (60) is connected to the input shaft (52), and
- the energy store (58) is connected and/or couplable to the stator (64) such that electrical power is able to be transmitted from the energy store (58) to the stator (64), wherein the magnetic-electrical epicyclic transmission stage (56), in particular the stator (64), is operable in such a way that the output shaft (54) is rotatable counter to the direction of rotation of the input shaft (52), so that the drivetrain (20) is operable in a forward and a reverse traction mode, and the output shaft (54) is a hollow shaft and the input shaft (52) is a solid shaft, wherein the input shaft (52) is arranged in the output shaft (54), **characterized in that** the drivetrain (20) further comprises a first electric machine (50), wherein the input shaft (52) is connected to the first electric machine (50) and the energy store (58) is connected and/or couplable to the first electric machine (50), wherein the first electric machine (50) is connected via the input shaft (52) to a drive (76) and the modulation ring (62) is connected via the output shaft (54) to a power take-off (80).

2. Drivetrain according to Claim 1, **characterized in that** the drivetrain (20) comprises a control unit (42), wherein the drivetrain is operable by way of the control unit (42).

3. Drivetrain according to either of Claims 1 and 2, **characterized in that** the drivetrain (20) comprises a set of power electronics (70) in order to transmit the electrical power between the first electric machine (50), the energy store (58) and the stator (64) of the magnetic-electrical epicyclic transmission stage (56).

4. Drivetrain according to at least one of the preceding claims, **characterized in that** the output shaft (54) is coaxial with respect to the input shaft (52).

5. Drivetrain according to at least one of the preceding claims, **characterized in that** the drivetrain (20) comprises a first and/or second transmission unit (90, 92).

6. Drivetrain according to Claim 5, **characterized in that** the first and/or second transmission unit (90, 92) has a reverse gear.

7. Drivetrain according to either of Claims 5 and 6, **characterized in that** the first electric machine (50) is connected via the input shaft (52) to the first transmission unit (90), and/or the modulation ring (62) is connected via the output shaft (54) to the second transmission unit (92).

8. Drivetrain according to at least one of the preceding claims, **characterized in that** the drivetrain (20) comprises a powershift reversing unit (100) for reversing the direction of travel.

9. Drivetrain according to Claim 8, **characterized in that** the powershift reversing unit (100) has a planetary gear set (102).

10. Drivetrain according to at least one of the preceding claims, **characterized in that** a rear-axle bevel-gear drive (104) is connected to the output shaft (54), and/or the output shaft (54) is connected to a toothing of a front-axle drive (110).

11. Vehicle comprising a drivetrain according to one of Claims 1 to 10.

12. Vehicle according to Claim 11, wherein the vehicle (10) is driveable by way of the drivetrain (20).

## Revendications

1. Chaîne cinématique (20) pour un véhicule (10), comprenant
- un arbre d'entrée (52),
- un arbre de sortie (54),
- un accumulateur d'énergie (58),
et un étage d'engrenage planétaire magnéto-électrique (56), qui comprend un rotor (60), un stator (64) et, disposée entre eux, une bague de modulation (62), dans lequel
- la bague de modulation (62) est reliée à l'arbre de sortie (54), et
- le rotor (60) est relié à l'arbre d'entrée (52), et
- l'accumulateur d'énergie (58) est relié et/ou peut être couplé au stator (64) de sorte qu'une puissance électrique puisse être transférée de l'accumulateur d'énergie (58) au stator (64), l'étage d'engrenage planétaire magnéto-électrique (56), en particulier le stator (64), pouvant fonctionner de telle sorte que l'arbre de sortie (54) puisse tourner en sens inverse du sens de rotation de l'arbre d'entrée (52), de manière à ce que la chaîne cinématique (20) puisse fonctionner en marche avant et en marche arrière, et l'arbre de sortie (54) étant un arbre creux, et l'arbre d'entrée (52) étant un arbre plein, l'arbre d'entrée (52) étant disposé dans l'arbre de sortie (54), **caractérisé en ce que** la chaîne cinématique (20) comprend en outre une première machine électrique (50), l'arbre d'entrée (52) étant relié à la première machine électrique (50) et l'accumulateur d'énergie (58) étant relié et/ou pouvant être couplé à la première machine électrique (50), la première machine électrique (50) étant reliée à un moyen d'entraînement (76) par l'intermédiaire de l'arbre d'entrée (52) et la bague de modulation (62) étant reliée à une prise de force (80) par l'intermédiaire de l'arbre de sortie (54).

2. Chaîne cinématique selon la revendication 1, **caractérisée en ce que** la chaîne cinématique (20) comprend une unité de commande (42), la chaîne cinématique pouvant être actionnée au moyen de l'unité de commande (42).

3. Chaîne cinématique selon l'une des revendications 1 ou 2, **caractérisée en ce que** la chaîne cinématique (20) comprend une électronique de puissance (70) destinée à transférer la puissance électrique entre la première machine électrique (50), l'accumulateur d'énergie (58) et le stator (64) de l'étage d'engrenage planétaire magnéto-électrique (56).

4. Chaîne cinématique selon au moins l'une des revendications précédentes, **caractérisée en ce que** l'arbre de sortie (54) est coaxial par rapport à l'arbre d'entrée (52).

5. Chaîne cinématique selon l'une des revendications précédentes, **caractérisée en ce que** la chaîne cinématique (20) comprend une première et/ou une deuxième unité de transmission (90, 92).

6. Chaîne cinématique selon la revendication 5, **caractérisée en ce que** la première et/ou la deuxième unité de transmission (90, 92) présentent une marche arrière.

7. Chaîne cinématique selon l'une des revendications 5 ou 6, **caractérisée en ce que** la première machine électrique (50) est reliée, par l'intermédiaire de l'arbre d'entrée (52), à la première unité de transmission (90) et/ou **en ce que** la bague de modulation (62) est reliée, par l'intermédiaire de l'arbre de sortie (54), à la deuxième unité de transmission (92).

8. Chaîne cinématique selon au moins l'une des revendications précédentes, **caractérisée en ce que** la chaîne cinématique (20) comprend une unité d'inversion de marche sous charge (100) destinée à inverser le sens de marche.

9. Chaîne cinématique selon la revendication 8, **caractérisée en ce que** la chaîne cinématique (100) comporte un train planétaire (102).

10. Chaîne cinématique selon au moins l'une des revendications précédentes, **caractérisée en ce qu'**un pignon conique d'essieu arrière (104) est relié à l'arbre de sortie (54) et/ou **en ce que** l'arbre de sortie (54) est relié à un pignon d'un entraînement d'essieu avant (110).

11. Véhicule comprenant une chaîne cinématique selon l'une des revendications 1 à 10.

12. Véhicule selon la revendication 11, le véhicule (10) pouvant être entraîné par la chaîne cinématique (20).
